# EUROPEAN PATENT APPLICATION

(11) **EP 3 210 839 A1**
(43) Date of publication of application: **30.08.2017**
(21) Application number: 16275031.9
(22) Date of filing: 23.02.2016
(51) Int. Cl.: B60R 25/30, G08B 13/186

(54) **OPTICAL SECURITY DETECTOR**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The invention relates to apparatus and methods for securing a body using an optical detector, particularly to apparatus and methods used to detect ingress into the covered trailer of a lorry. There is provided an optical detector for a body (1) to be monitored, comprising a body, said body (1) comprising a storage area (10), at least one closure (7) for closing the storage area (10), a locking means for keeping the closure in a substantially closed position,
said optical detector comprising an optical fibre, a transmitter (14) arranged to transmit a transmission signal through the optical fibre (2), a reflector (38) arranged to provide a return signal through the optical fibre (2), a receiver (14) to receive said return signal, a monitor (15) arranged to compare the transmission signal with the return signal, and an indicator (15) arranged to inform a user when there is a difference (99) between the transmission signal and the return signal,
wherein the optical fibre (2) is operably linked to the closure (7) and/or locking means, and is configured to indicate to a user that the storage area (10) has been accessed.

## Description

The following invention relates to apparatus and methods for securing a body using an optical detector, particularly to apparatus and methods used to detect ingress into the covered trailer of a lorry.

Before the present invention is described in further detail, it is to be understood that the invention is not limited to the particular embodiments described, as such may, of course, vary. It is also to be understood that the terminology used herein is for the purpose of describing particular embodiments only, and is not intended to be limiting, since the scope of the present invention will be limited only by the appended claims.

According to the first aspect of the invention there is provided an optical detector comprising an optical fibre, a transmitter arranged to transmit a transmission signal through the optical fibre, a reflector arranged to provide a return signal through the optical fibre, a receiver to receive said return signal, a monitor arranged to compare the transmission signal with the return signal, and an indicator arranged to inform a user when there is a difference between the transmission signal and the return signal.

In the past prevention of access to lorry trailers has been achieved using locks and passive cables, with users of these systems visually inspecting the locks and passive cables to detect whether they have been tampered with. The disadvantage of this method of detection is that locks can be undone and passive cables can be cut and reconnected in such a way that casual visual inspection will not detect tampering. The use of an optical fibre in the detector arrangement ensures that attempts to gain access to the body by tampering with the detector specifically the optical fibre will be highlighted to a user as the round trip time delay as well as the intensity of the return signal will change if the optical fibre is damaged or disconnected, the level of intensity may be used to determine the extent of the damage or condition of the optical fibre. This change in round trip delay time and intensity enables the indicator to determine the position and extent of the damage in the optical cable and hence the location of attempted entry. Degraded or degrading intensity in the return signal may indicate damage to the optical cable caused by excessive bending or a pinch in the optical cable. Reconnection of optical fibres requires specialist equipment, but even if fibres were reconnected the initial disconnection will be highlighted to the user.

The transmission signal may be a simple pulse or continuous signal. The optical fibre may carry data, such as, for example relaying data from a video surveillance system monitoring the body.

The transmitter and receiver may be a transceiver and may convert the signal from an electrical signal to an optical signal and vice versa. The monitor and/or indicator may be attached to or integrated with the body being monitored, and/or remote from the body being monitored with communication through a wired or wireless connection.

In a further arrangement of the invention the indicator may be audible and/or visible.

An audible and/or visible indicator gives those responsible for monitoring the body an indication that the body has been tampered with. It may also act as a deterrent to the individual or individuals that are tampering with the body and/or detector.

The indicator may be a status indicator highlighting to the user that the optical fibre has or hasn't been tampered with. The indicator may be singularly or a combination of siren, horn, alarm, text or voice message, flashing and continuous light, or a latched switch. The audible/visible indicator may be attached to or integrated with the body being monitored, and/or remote from the body being monitored with communication through a wired or wireless connection. The indicator may indicate to a user the position where the tampering occurred.

In a further arrangement the optical fibre may be plastic or glass.

Plastic optical fibre may be a polymer, and glass optical fibre may be silica, fluoride glass, phosphate glass or chalcogenide glass.

In a further arrangement of the invention the optical fibre may be embedded within a housing.

Embedding the optical fibre within a housing may protect the optical fibre from accidental damage. The housing may strengthen the optical fibre and if a covert optical detector is required, it may reduce the chances of the optical fibre being identified by those wishing to tamper with the body and/or optical detector. The housing may be a sheath, cladding, jacket, a fibre reinforced polymer composite structure, fabric, polymer, cable, a strengthening member or an integral part of the body.

In a further arrangement of the invention the optical fibre is a single mode fibre.

A single mode fibre is more difficult to repair compared to a multi-mode fibre as the fibre core is significantly smaller (for example, 8 microns compared to 50 microns) and the cores have to be precisely aligned in order to make an effective repair.

The use of a physical carrier medium, such as an optical fibre to transmit the optical signal, rather than transmission of a beam of light, as commonly found in domestic alarms, is that any movement of the body during its normal and intended use may give rise to false alarms. A vehicle trailer once secured, especially with soft sides, will flex and distort during normal use, and further any movement of the cargo contained therein may also cause an emitted beam of light through the air to be broken. The use of an optical fibre reduces the incidents of a false alarm, as breaking the fibre requires a shearing force to break the fibre rather than mere misalignment of a beam, readily caused by flexing of the body or movement of contents within the body during normal use.

In a further arrangement the monitor may comprise an optical splitter/combiner or optical circulator which is used to route the transmission signal to the optical fibre and route the return signal to the optical receiver.

In a further arrangement of the invention the distal end of the optical fibre may be provided with a mirrored surface.

A mirrored surface removes the need for a separate reflector or a second transmitter at the distal end of the optical fibre to provide the return signal. The mirrored surface may be a mirror, retroreflector or fibre optic reflector.

In a further aspect of the invention there is provided an optical tamper evident device comprising an optical detector as defined herein.

The optical tamper evident device comprises an optical detector comprising an optical fibre, a transmitter arranged to transmit a transmission signal through the optical fibre, a reflector arranged to provide a return signal through the optical fibre, a receiver to receive said return signal, a monitor arranged to compare the transmission signal with the return signal, and an indicator arranged to inform a user when there is a difference between the transmission signal and the return signal. The optical tamper evident device uses optical fibre in the detector to ensure that attempts to gain access to the body by tampering with the detector will be highlighted to a user as the round trip time delay as well as the intensity of the return signal will change if the optical fibre is damaged or disconnected. This change in round trip delay time and intensity enables the indicator to determine the position of the damage in the optical cable.

In a further aspect of the invention there is provided a body to be monitored, said body comprising a storage area, at least one closure for closing the storage area, locking means for keeping the closure in a substantially closed position, and the detector as defined herein, to detect ingress to the storage area, wherein the optical fibre is operably linked to the closure and or locking means, and is configured to indicate to a user that the storage area has been accessed.

The use of an optical fibre operably linked to the body ensures that the detector will monitor attempts to gain access to the body, as tampering with the optical fibre will be highlighted to a user; as the round trip time delay as well as the intensity of the return signal will change if the optical fibre is damaged or disconnected. This change in round trip delay time and intensity enables the indicator to determine the position of the damage in the optical cable and therefore whereabouts on the body, such as, for example a storage area has been accessed.

The storage area may be a trailer, an ISO container, an intermodal container, a room or building, or any enclosable area. The closure for closing the storage area may be at least one door, soft sided curtains or flaps, articulated cover or window. The locking means may be any routinely used fastener, such as, for example a cam lock or ratchet strap.

The monitor and indicator may be singly or in combination attached to or integrated with the body being monitored. The monitor and/or indicator may be remote from the body being monitored with communication through a wired or wireless connection. The use of remote monitoring allows disconnected trailers or containers to be monitored even when the cab is not attached. The indicator may notify a central command centre or the vehicles driver by means of a mobile device.

In a further arrangement of the invention the optical fibre forms an integral part of the closure, locking means or is embedded within the body.

The optical fibre when formed as an integral part of the enclosure protects the optical fibre from accidental damage, strengthens the detector, and reduces the chances of the optical fibre being identified by those wishing to tamper with the optical fibre or detector. Integral may be, such as, for example embedded within, adjacent to or connected to.

In a further arrangement of the invention the body is a vehicle, vessel or craft.

The vehicle, vessel or craft may be in the land, air or maritime domain. The body may be a lorry with a fixed or articulated trailer (and optionally removable from the cab). The transmitter, receiver, monitor and indicator may singly or in combination be in the cab or the trailer.

In a further aspect of the invention there is provided a method of detecting access to a body, wherein said body comprises a detector as described herein, wherein said optical fibre is operably linked to said body, comprising the steps of:
I. generating a transmission signal for transmission along an optical fibre;
II. transmitting the transmission signal along the optical fibre;
III. receiving a reflected return signal along the optical fibre;
IV. comparing the transmission signal and the reflected return signal;
V. indicating to a user the result of the comparison.

In a further arrangement the comparing step comprises determining a characteristic aspect of the signal, such as for example the intensity, frequency, amplitude or round trip time delay of the reflected return signal.

In a preferred arrangement comparison of the round trip time delay may provide the location of the break in the optical fibre.

In a further aspect of the invention there is provided a vehicle, vessel or craft comprising an optical detector as described herein.

In a further aspect of the invention there is provided an optical detector comprising an optical fibre, a transmitter arranged to transmit a transmission signal through the optical fibre, a receiver arranged to receive said transmission signal, a monitor arranged to compare the transmission signal with a reference signal, and an indicator arranged to inform a user when there is a difference between the transmission signal and the reference signal.

In a further aspect of the invention there is provided an electrical detector for a body to be monitored, comprising a body, said body comprising a storage area, at least one closure for closing the storage area, a locking means for keeping the closure in a substantially closed position, said electrical detector comprising an electrical conductor, a power source connected to the electrical conductor and arranged to energise the electrical conductor, a monitor arranged to detect changes in the electrical characteristics in the electrical conductor, and an indicator arranged to inform a user of changes in electrical characteristics in the electrical conductor, wherein the electrical conductor is operably linked to the closure and/or locking means. The electrical characteristics may be resistance, or may be the change in an electronic signal or electrical pulse passed through the electrical conductor.

In a preferred arrangement the electrical detector comprises a second electrical conductor arranged to provide a return electrical path to the monitor arranged to detect changes in the electrical characteristics between the electrical conductor and the second electrical conductor.

Where the body is formed from a conductive material, the electrical conductor may be electrically isolated from the body, by means of a nonconducting outer layer.

An embodiment of the invention will now be described by way of example only and with reference to the accompanying drawings of which:-
Figure 1 shows a plan view of a body comprising an optical detector according to the present invention.
Figure 2 shows a plan view of a body comprising an optical detector according to the present invention.
Figure 3 shows a schematic of an optical detector according to the present invention.
Figure 4 shows an example difference in timing between an optical fibre which hasn't been damaged and an optical fibre which has been damaged.

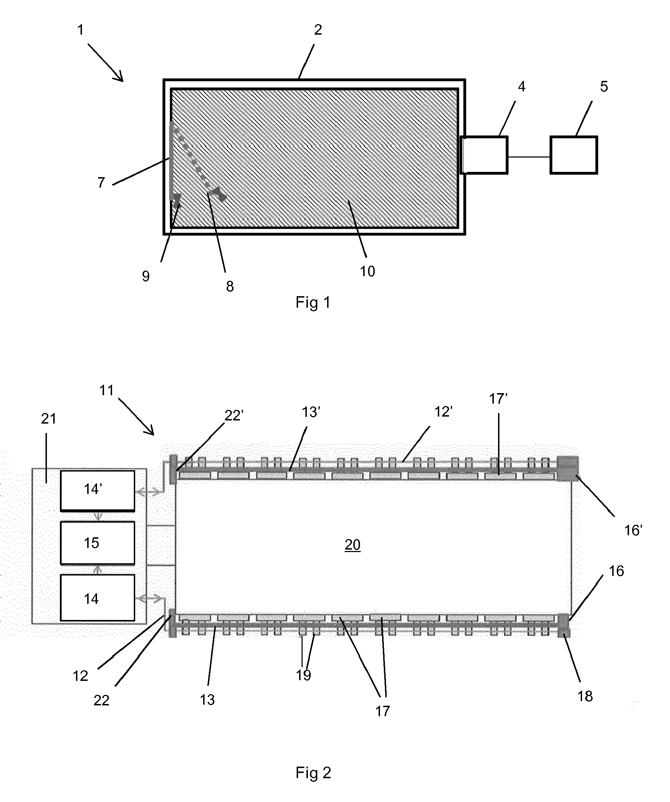

Turning now to Figure 1 there is provided a body 1, which forms a storage area 10 comprising a closure 7 for closing the storage area 10, the closure 7, shown in a closed position, will be held in a closed position by locking means 9. The storage area 10 has an optical fibre 2 around the boundary of the storage area 10. The optical fibre 2 is connected to a transmitter and receiver in the form of a transceiver 4 which is in turn connected to a monitor and indicator 5. Opening the closure 7 to an open position 8 will cause the optical fibre 2 to be broken, thereby resulting in a change in the signal received by transceiver 4, which is detected and actioned by the monitor and indicator 5.

Figure 2 shows a lorry 11 comprising a trailer 20 and a cab 21. In this embodiment the trailer 20 is a soft sided trailer which is closed by an articulated curtain 17. The articulated curtain 17 is locked to the base of the trailer 20 by multiple cam locks 19. In order to further secure the trailer 20, locking means in the form of a steel tilt cable 13 is unwound from a spool 16 at the rear of the trailer 20 and threaded through each of the multiple cam locks 19. The steel tilt cable 13 is then clamped in place at an anchor point 22. In addition an optical fibre 12 runs through each of the multiple cam locks 19 and is integrated with the steel tilt cable 13 and articulated curtain 17. For clarity the optical fibre 12 is shown adjacent to the steel tilt cable 13, and is clamped in place with a fibre optic clamp 18 at the rear of the trailer 20. The optical fibre 12 is then connected to an optical transmitter and receiver 14 which converts the received optical signal into an electronic signal for processing by the monitor and indicator 15. In this embodiment there is a second optical fibre 12' and steel tilt cable 13' to detecting tampering with a soft sided curtain 17' on a second side of the trailer 20. There is a separate optical transmitter and receiver 14, 14' for each optical fibre 12, 12', however, a single optical transmitter and receiver 14 could be used with the arrangement on each side of the trailer having an individual signal signature to differentiate between the multiple optical cables 12 and 12'. Also in this embodiment, the optical transmitter and receiver 14, 14' and the monitor and indicator 15 are located in the cab 21.

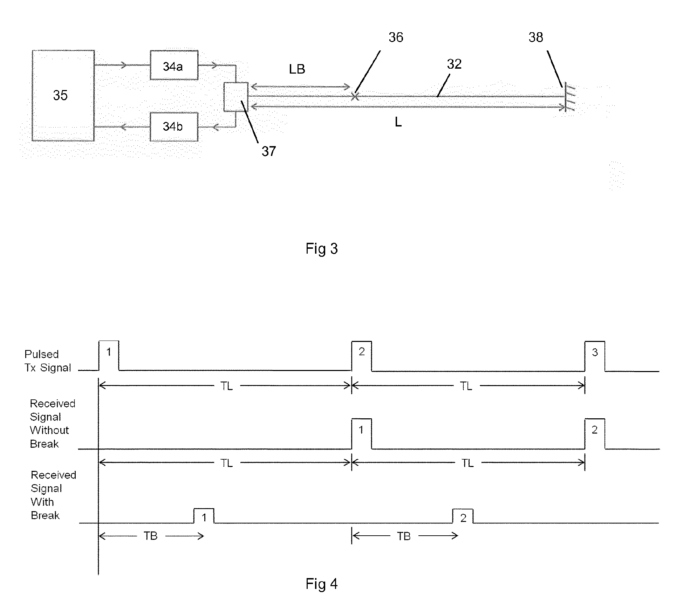

Figure 3 shows the monitor and indicator 35 which generates an electrical signal to be monitored and an optical transmitter 34a which converts the electrical signal to an optical signal. In this embodiment the optical signal is routed through an optical splitter/combiner 37 and along the optical fibre 32 of length L. The optical signal is reflected back along the optical fibre 32 by a reflector 38 located at the distal end of the optical fibre 32 where the optical splitter/combiner 37 separates the reflected optical signal from the optical signal being transmitted by the optical transmitter 34a. The reflected signal is then received at an optical receiver 34b which converts the optical signal into a received electrical signal which can be processed by the monitor and indicator 35.

The monitor and indicator 35 compares the intensity or time of arrival of the received electrical signal with the electrical signal to be monitored to determine whether the optical fibre 32 has been damaged. For clarity the electrical signal to be monitored and received electrical signal are shown in Figure 4 as pulsed signals. The expected time delay of the received electrical signal TL along the optical fibre 32 of length L and the amplitude of the received electrical signal when compared to the electrical signal to be monitored are monitored by the monitor and indicator 35. If there is a break 36 in the optical fibre 32 as shown in Figure 3 then the length of the connected fibre is reduced to a break length LB which will result in a change from the expected time delay of the received electrical signal TL to a time delay determinate by the position of the break TB. As the reflectivity of a fibre to air interface is only around 14% compared to 100% from the reflector 38, the break 36 results in a reduction in amplitude of the received electrical signal as shown in Figure 4. This reduction in amplitude and the change in time delay of the received electrical signal will result in the monitor and indicator 35 of Figure 3 indicating the presence and position of the break 36 as calculated by the monitor and indicator 35. The result will be the same if there is an attempt to repair the break 36 by using a mirrored surface or attenuator at the break 36, as the time delay of the received electrical signal will not be the expected time delay of the received electrical signal TL and/or the received electrical signal will have a different amplitude.

## Claims

1. An optical detector for a body to be monitored, comprising a body, said body comprising a storage area, at least one closure for closing the storage area, a locking means for keeping the closure in a substantially closed position,
said optical detector comprising an optical fibre, a transmitter arranged to transmit a transmission signal through the optical fibre, a reflector arranged to provide a return signal through the optical fibre, a receiver to receive said return signal, a monitor arranged to compare the transmission signal with the return signal, and an indicator arranged to inform a user when there is a difference between the transmission signal and the return signal, wherein the optical fibre is operably linked to the closure and/or locking means, and is configured to indicate to the user that the storage area has been accessed.

2. A detector according to claim 1 wherein the optical fibre forms an integral part of the closure, locking means or body.

3. A detector according to any of claims 1 and 2 wherein the body is a vehicle, vessel or craft.

4. A detector according to any one of the preceding claims wherein the indicator is audible and/or visible.

5. A detector according to any of the preceding claims wherein the optical fibre is plastic or glass.

6. A detector according to any of the preceding claims wherein the optical fibre is embedded within a housing.

7. A detector according to any of the preceding claims wherein the optical fibre is a single mode fibre.

8. A detector according to any of the preceding claims wherein the monitor comprises an optical splitter/combiner to affect the comparison of the transmitted signal and returned signal.

9. A detector according to any of the preceding claims wherein the distil end of the optical fibre is provided with a mirrored surface.

10. An optical detector comprising an optical fibre, a transmitter arranged to transmit a transmission signal through the optical fibre, a reflector arranged to provide a return signal through the optical fibre, a receiver to receive said return signal, a monitor arranged to compare the transmission signal with the return signal, and an indicator arranged to inform a user when there is a difference between the transmission signal and the return signal.

11. An optical tamper evident device comprising the optical detector according to claim 10.

12. A method of detecting access to a body, wherein said body comprises a detector according to any one of claims 1 to 9, wherein said optical fibre is operably linked to said body, comprising the steps of:
a. generating a transmission signal for transmission along an optical fibre;
b. transmitting the transmission signal along the optical fibre;
c. receiving a reflected return signal along the optical fibre;
d. comparing the transmission signal and the reflected return signal;
e. indicating to a user the result of the comparison.

13. A method according to claim 12 wherein the comparing step comprises determining a round trip time delay of the reflected return signal.

14. A method according to claim 13 wherein comparison of the round trip time delay provides the location of the break in the optical fibre.

15. A vehicle, vessel or craft comprising an optical detector according to any of claims 1 to 9.
